# EUROPÄISCHE PATENTSCHRIFT

(11) **EP 3 645 918 B1**
(45) Veröffentlichungstag und Bekanntmachung des Hinweises auf die Patenterteilung: **08.07.2026**
(21) Anmeldenummer: 18726395.9
(22) Anmeldetag: 15.05.2018
(51) Int. Cl.: F16H 61/00, F16H 63/34

(54) **EINRICHTUNG ZUR BLOCKIERUNG EINES GETRIEBES**
DEVICE FOR BLOCKING A TRANSMISSION
DISPOSITIF POUR BLOQUER UNE TRANSMISSION

(30) Priorität: 30.06.2017 DE 102017211218
(43) Veröffentlichungstag der Anmeldung: 06.05.2020
(73) Patentinhaber: Robert Bosch GmbH, 70442 Stuttgart (DE)
(72) Erfinder: WETZEL, Gerhard, 70825 Korntal-Muenchingen (DE); DREWE, Ingo, 77815 Buehl (DE)
(86) Internationale Anmeldenummer: PCT/EP2018/062509
(87) Internationale Veröffentlichungsnummer: WO 2019/001831

(56) Entgegenhaltungen:
- WO-A1-2017/005407
- WO-A1-2017/005407
- DE-A1- 102009 030 006
- DE-A1- 102010 029 401
- DE-A1- 102010 029 401
- DE-A1- 102011 086 547
- DE-A1- 102011 086 547
- DE-A1- 102014 219 039
- DE-A1- 102014 219 039
- JP-A- 2000 085 552
- JP-A- 2013 127 264

## Beschreibung

Die vorliegende Erfindung betrifft einen Fahrzeugantrieb mit einer Parksperre zur Blockierung eines Getriebes, beispielsweise eines Fahrzeuggetriebes, mit einer Betätigungseinrichtung zum Einlegen und Auslegen einer mit dem Abtrieb in Verbindung stehenden Blockierung eines Getriebes und mit einer Notlaufbetätigungseinrichtung zum Einlegen der Blockierung eines Getriebes im Notlaufbetrieb.

### Stand der Technik

In Automatikgetrieben für Kraftfahrzeuge werden Einrichtungen zur Blockierung eines Getriebes als Parksperren eingesetzt, um ein ungewolltes Wegrollen von abgestellten Fahrzeugen zu verhindern. In der Regel werden dazu Sperrenräder mit Zahnlücken drehfest in den Antriebsstrang verbaut, die mittels formschlüssig in die Zahnlücken eingreifenden betätigbaren Sperrklinken die Drehbewegung des Antriebs blockieren oder freigeben. Diese als Parksperren eingesetzten Einrichtungen zur Blockierung des Getriebes werden eingelegt, wenn der Wählhebel des Automatikgetriebes in die Stellung P gebracht wird. Das ist die Voraussetzung, dass bei stehendem Motor beispielsweise der Fahrzeugschlüssel im Zündschloss zum Abziehen freigegeben wird. In der Regel werden diese Einrichtungen zur Blockierung des Getriebes hydraulisch durch die im Getriebe vorhandene Druckölversorgung betätigt. Bei elektrischen Fahrzeugantrieben steht üblicherweise diese hydraulische Druckölversorgung nicht zur Verfügung. Daher werden elektromechanische Betätigungen für die Einrichtungen zur Blockierung des Getriebes entwickelt, welche die hydraulische Druckversorgung nicht benötigen.

In der DE 10 2014 211 390 A1 wird eine Parksperrenanordnung vorgeschlagen, die durch einen Elektromotor und einen Hubmagnet als redundante Betätigung gekennzeichnet ist. In diesem Fall ist sowohl die Betätigungsmechanik als auch der Antrieb innerhalb des mindestens teilweise mit Öl gefüllten Getrieberaums angeordnet. Die Komponenten der Parksperrenanordnung sind öl- und temperaturfest ausgeführt, die elektrischen Anschlüsse werden abgedichtet aus dem mindestens teilweise mit Öl gefüllten Getrieberaum herausgeführt. Der technische Aufwand, die Komponenten öl- und temperaturfest auszuführen und die elektrischen Anschlüsse abgedichtet aus dem Getriebe herauszuführen ist sehr hoch und entsprechend teuer. Ebenfalls wird die Robustheit der Komponenten verschlechtert.

Die DE 10 2011 086 547 A1, welche die Basis für die zweiteilige Anspruchsfassung bildet, offenbart ein Getriebe für ein Kraftfahrzeug mit einem Getrieberaum und einer Parksperre zur Blockierung des Getriebes mit einer Betätigungsmechanik, die in dem Getrieberaum angeordnet ist, und einem Antrieb der Betätigungsmechanik, der Antrieb als Elektromotor ausgebildet ist und außerhalb des Getrieberaums angeordnet ist, wobei eine Antriebswelle des Elektromotors durch eine Wand des Getriebes in den Getrieberaum geführt ist und durch eine Dichtung abgedichtet ist.

Die DE 10 2014 219 039 A1 offenbart eine Koppeleinrichtung für eine Parksperreneinrichtung eines Kraftfahrzeuges, welches ein Kraftfahrzeuggetriebe mit einer Parksperre und einen mit der Parksperre gekoppelten Gangwahlhebel umfasst, welcher in eine Parksperrenstellung zum Einlegen der Parksperre und aus der Parksperrenstellung zum Lösen der Parksperre bewegbar ist.

Die DE 10 2010 029 401A1 beschreibt ein Getriebe mit einer Parksperreneinrichtung, welche als modulare Baugruppe in eine Ausnehmung eines Gehäuses des Getriebes montiert ist. Weitere Parksperreneinrichtungen werden in der DE 10 2011 086 547 A1 und in der DE 10 2014 219 039 A1 beschrieben.

Die WO 2017/005 407 A1 bezieht sich auf ein Parksperrgetriebe und ein Verfahren zum Betreiben eines Parksperrgetriebes eines Fahrzeugs. Es wird ein Parksperrgetriebe zum Betreiben eine Parksperreinheit eines Fahrzeugs offenbart, wobei das Parksperrgetriebe ein Planetengetriebe umfasst, welches ein Sonnerad, ein Hohlrad und zumindest ein mit dem Sonnenrad und dem Hohlrad kämmendes Planetenrad aufweist. Das zumindest eine Planetenrad ist an einem drehbar gelagerten Planetenträger befestigt. Ferner umfasst das Parksperrgetriebe eine Federeinheit, die mit dem Hohlrad gekoppelt ist, wobei die Federeinheit ausgebildet ist, um durch eine Drehung des Hohlrads gespannt zu werden und im gespannten Zustand ein Drehmoment und/oder eine Kraft auf das Hohlrad auszuüben. Auch umfasst das Parksperrgetriebe eine Hohlradfixierungseinheit, die ausgebildet ist, um in einem ersten Betriebszustand das Hohlrad gegen eine Drehung zu fixieren und in einem zweiten Betriebszustand eine Drehung des Hohlrads freizugeben. Schließlich umfasst das Parksperrgetriebe eine mit dem Planetenträger gekoppelte Arretierungseinheit, die ausgebildet ist, um bei einer Drehung des Planetenträgers die Parksperreinheit des Fahrzeugs zwischen einem Sperrzustand und einem Freigabezustand umzuschalten, insbesondere, wobei der Sperrzustand einer am Fahrzeug eingelegten Parksperre entspricht und der Freigabezustand einer am Fahrzeug ausgelegten Parksperre entspricht.

Die JP 2013 127264 A bezieht sich auf eine Parksperre eines Fahrzeugs.

Die JP 2000 085552 A bezieht sich auf eine elektrisch angetriebene Parksperre, welche ein Hafterzeugungsmittel umfasst, um diese mit einem Parksperrenrad in oder außer Eingriff zu bringen, was abhängig von der Ansteuerung einer Parksteuereinrichtung erfolgt.

Die DE 10 2009 030 006 A1 hat einen Aktuator zum Gegenstand. Dieser dient der Aktuierung einer Funktionseinheit mit einem Antriebselement und einem in zumindest eine Aktuierungsrichtung bewegbaren Aktuatorelement, wobei das Antriebselement und das Aktuatorelement antriebswirksam in Verbindung stehen und wobei das Aktuatorelement eine relativ zu der Aktuierungsrichtung geneigte, insbesondere ringförmig ausgebildete Anlaufschräge aufweist. Die Anlaufschräge ist derart ausgebildet, dass durch ein Zusammenwirken der Anlaufschräge mit einer entsprechend ausgebildeten Anlaufschräge der Funktionseinheit eine Aktuierung der Funktionseinheit bewirkbar ist.

Durch die Ausführung der Einrichtung zur Blockierung des Getriebes ohne Positionssensor kann der Zustand der Blockierung nicht eindeutig erfasst werden. Die alternativ vorgeschlagenen elektronisch kommutierten Motoren sind einerseits sehr aufwendig, sie ermöglichen andererseits aber keine absolute Positionserkennung der Parksperre.

Elektrisch betätigte Einrichtungen zur Blockierung des Getriebes, die ausschließlich aus dem Fahrzeug-Bordnetz versorgt werden, sind bei Ausfall des Fahrzeug-Bordnetzes ohne Funktion. Ohne eine redundante Energieversorgung ist bei einem Ausfall des Bordnetzes die Parkbremsenfunktion der Einrichtung zur Blockierung des Getriebes nicht mehr gegeben.

Die üblicherweise im mindestens teilweise mit Öl gefüllten Getrieberaum angeordneten Einrichtungen zur Blockierung des Getriebes erfordern in der Regel Bauraum im Bereich des Parksperrenrades, der dort in der Regel nicht zur Verfügung steht.

Es besteht daher der Bedarf nach einer robusten, funktionssicheren, bauraum- und kostengünstigen Betätigung für die Einrichtung zur Blockierung des Getriebes.

### Offenbarung der Erfindung

Die Erfindung betrifft einen Fahrzeugantrieb mit einem Getriebe und mit einem mindestens teilweise mit Öl gefüllten Getrieberaum und einer Parksperre zur Blockierung des Getriebes mit den Merkmalen des unabhängigen Anspruchs 1.

Dadurch, dass die Parksperre zur Blockierung des Getriebes von einem außerhalb des mindestens teilweise mit Öl gefüllten Getrieberaums angeordneten elektromechanischen Antrieb betätigt wird, braucht der Antrieb weder öl- noch temperaturfest ausgelegt werden und die elektrischen Anschlüsse müssen nicht durch die Getriebewand geführt werden. Weiterhin ist vorteilhaft, dass der elektromechanische Antrieb keine Druckölversorgung zur hydraulischen Betätigung erfordert.

Es ist eine elektromechanische Parksperre zur Blockierung des Getriebes vorgesehen, bestehend aus einer Betätigungsmechanik und einem Antrieb. Die Betätigungsmechanik ist innerhalb des Getriebes in einem mindestens teilweise mit Öl gefüllten Getrieberaum angeordnet, der Antrieb ist in vorteilhafter Weise außerhalb des mindestens teilweise mit Öl gefüllten Getrieberaums angeordnet.

Vorteilhafterweise wird für den Antrieb der elektromechanisch betätigten Einrichtung zur Blockierung des Getriebes ein Elektromotor verwendet. Elektromotoren sind einerseits sehr robust und andererseits bei einfachen Bauarten sehr kostengünstig. Vorteilhaft ist, dass der Elektromotor keine Druckölversorgung und keine Betätigungsventile erfordert.

Besonders vorteilhaft ist durch die Anordnung des Elektromotors außerhalb des mindestens teilweise mit Öl gefüllten Getrieberaums, dass ausschließlich die Antriebswelle des Elektromotors durch die Getriebewand geführt und abgedichtet werden muss. Bereits bei Verwendung von kostengünstigen handelsüblichen Wellendichtungen ergibt sich in vorteilhafter Weise eine robuste Abdichtung der Antriebswelle des Elektromotors. Ebenfalls ist von Vorteil, dass die elektrischen Anschlussleitungen nicht durch die Getriebewand in den teilweise mit Öl gefüllten Getrieberaum geführt und abgedichtet werden müssen.

Erfindungsgemäß ist ein Positionsgeber der elektromechanisch betätigten Parksperre zur Blockierung des Getriebes innerhalb des mindestens teilweise mit Öl gefüllten Getrieberaums angeordnet. Damit ergibt sich auf kostengünstige, funktionssichere und robuste Weise eine absolute Positionserkennung der Einrichtung zur Blockierung des Getriebes. Von Vorteil ist ebenfalls, dass keine Öffnung der Getriebewand des teilweise mit Öl gefüllten Getrieberaums zur Durchführung des Positionsgebers erforderlich ist.

Besonders vorteilhaft ist die Ergänzung der elektromechanisch betätigten Einrichtung zur Blockierung des Getriebes durch einen zusätzlichen Notfallantrieb, der in vorteilhafter Weise bei einem Ausfall des Elektromotors oder der elektrischen Stromversorgung des Antriebs das vollständige Einlegen der Einrichtung zur Blockierung des Getriebes ermöglicht und somit einen sicheren Zustand des Fahrzeugs gewährleistet.

Günstig ist die Anordnung des Notfallantriebs für die Einrichtung zur Blockierung des Getriebes innerhalb des mindestens teilweise mit Öl gefüllten Getrieberaums. Das hat den Vorteil, dass kostengünstige Großserien-Komponenten verwendet werden können, die aus der Steuerung von Automatikgetrieben bekannt sind. Die Anordnung des Notfallantriebs innerhalb des mindestens teilweise mit Öl gefüllten Getrieberaums bietet außerdem den Vorteil, dass die Einrichtung zur Blockierung des Getriebes als manipulationssicherer Diebstahlschutz dient.

Besonders vorteilhaft ist die Ergänzung des Notfallantriebs der elektromechanisch betätigten Einrichtung zur Blockierung des Getriebes durch eine eigene Energiereserve. In vorteilhafter Weise stellt diese Energiereserve auch bei einem Ausfall der elektrischen Stromversorgung das vollständige Einlegen der Einrichtung zur Blockierung des Getriebes durch den Notfallantrieb sicher und gewährleistet somit einen sicheren Zustand des Fahrzeugs.

Die Betätigungsmechanik bildet zusammen mit dem Positionsgeber und dem Notfallantrieb eine vormontierbare Baugruppe. Diese Baugruppe bietet in der Getriebefertigung den Vorteil der einfachen und schnellen Montage. Weiterhin kann die Baugruppe unverändert als Standardbaugruppe in vorteilhafter Weise für unterschiedliche Getriebe eingesetzt werden, womit die Herstellstückzahl steigt und Kosteneffekte der Serienfertigung genutzt werden können.

Die abhängigen Ansprüche stellen vorteilhafte Weiterbildungen der vorliegenden Erfindung dar.

Bevorzugt wird die Ansteuerelektronik des Elektromotors direkt an den außerhalb des mindestens teilweise mit Öl gefüllten Getrieberaums angeordneten Elektromotor des Antriebs der elektromechanisch betätigten Einrichtung zur Blockierung des Getriebes angebaut. Damit ist die Ansteuerelektronik des Elektromotors weder öl- noch temperaturfest auszulegen. Die Ausführung der elektrischen Anschlüsse zwischen der Ansteuerelektronik und dem Elektromotor wird ebenfalls sehr einfach und kostengünstig, da weder lange Kabel noch Steckverbinder erforderlich sind.

Bevorzugt ist der Positionsgeber ein Magnet. Auf kostengünstige, funktionssichere und robuste Weise kann die Position des magnetischen Positionsgebers durch einen entsprechenden Sensor (beispielsweise Hallsensor) durch die Getriebewand des teilweise mit Öl gefüllten Getrieberaums hindurch ermittelt werden.

In vorteilhafter Weise ist der Positionssensor ein Sensor, der die Position des magnetischen Positionsgebers durch die Getriebewand des teilweise mit Öl gefüllten Getrieberaums hindurch ermittelt. Von Vorteil ist, dass der Sensor nicht für die Umgebungsbedingungen innerhalb des teilweise mit Öl gefüllten Getrieberaums ausgelegt werden muss und damit kostengünstig, funktionssicher und robust ist. Vorzugsweise wird der Sensor bzw. Positionsnehmer der Positionssensorik innerhalb der Ansteuerelektronik des Elektromotors außerhalb der Gehäusewand des mindestens teilweise mit Öl gefüllten Getrieberaums angeordnet. Die Integration des Positionsnehmers in die Ansteuerelektronik hat den Vorteil der entfallenden elektrischen Anschlüsse und Kabel.

Bevorzugt bildet der Antrieb der Einrichtung zur Blockierung des Getriebes bestehend aus dem Elektromotor, der Ansteuerelektronik und der Positionssensorik eine vormontierbare Baugruppe. Diese Baugruppe bietet in der Getriebefertigung den Vorteil der einfachen und schnellen Montage und bei einem Ausfall des Antriebs im Fahrzeug den Vorteil der schnellen und einfachen Austauschbarkeit des Antriebs der elektromechanisch betätigten Einrichtung zur Blockierung des Getriebes. Weiterhin kann die Baugruppe unverändert als Standardbaugruppe in vorteilhafter Weise für unterschiedliche Getriebe eingesetzt werden, womit die Herstellstückzahl steigt und Kosteneffekte der Serienfertigung genutzt werden können.

Vorzugsweise kann der Notfallantrieb die Einrichtung zur Blockierung des Getriebes aus jeder Position der elektromechanisch betätigten Einrichtung zur Blockierung des Getriebes einlegen. Damit wird vorteilhaft vermieden, dass bei einem teilweisen oder kompletten Ausfall des Antriebs der Einrichtung zur Blockierung des Getriebes das Fahrzeug eine ungewollte Bewegung bis zum Wirken der durch den Notfallantrieb betätigten Einrichtung zur Blockierung des Getriebes ausführt und somit keine für den Fahrzeugnutzer ungewohnte und unerwartete Fahrzeugbewegung stattfindet. Insbesondere ist von Vorteil, dass der Notfallantrieb auch bei einem bereits teilweise erfolgten Einlegevorgang in funktionssicherer und robuster Weise das vollständige Einlegen gewährleistet.

### Kurze Beschreibung der Zeichnungen

### Es zeigen:

- Fig. 1:: eine schematische Darstellung eines Fahrzeugs mit einer aus einem Motor und einem Getriebe bestehenden Antriebseinheit,
- Fig. 2:: zeigt eine schematische Darstellung eines Fahrzeugantriebs für ein Mehrspurfahrzeug mit einem Getriebe und einer Parksperre zur Blockierung des Getriebes,

- Fig. 3:: eine schematische Darstellung eines Fahrzeugantriebs für ein Mehrspurfahrzeug mit eingelegtem Zustand der Parksperre zur Blockierung des Getriebes,
- Fig. 4:: eine schematische Darstellung eines Fahrzeugantriebs für ein Mehrspurfahrzeug mit nicht eingelegtem Zustand der Parksperre zur Blockierung des Getriebes,
- Fig. 5:: eine schematische Darstellung eines erfindungsgemäßen Fahrzeugantriebs für ein Mehrspurfahrzeug mit einem zusätzlichen Notfallantrieb der Parksperre zur Blockierung des Getriebes,
- Fig. 6:: eine schematische Darstellung der Parksperre zur Blockierung des Getriebes in nicht eingelegten Zustand,
- Fig. 7:: eine schematische Darstellung der Parksperre zur Blockierung des Getriebes in eingelegten Zustand,
- Fig. 8:: eine schematische Darstellung der Parksperre zur Blockierung des Getriebes,
- Fig. 9:: eine schematische perspektivische Ansicht der Parksperre zur Blockierung des Getriebes,
- Fig. 10 a:: eine schematische Darstellung eines Schnitts durch die Parksperre zur Blockierung des Getriebes,

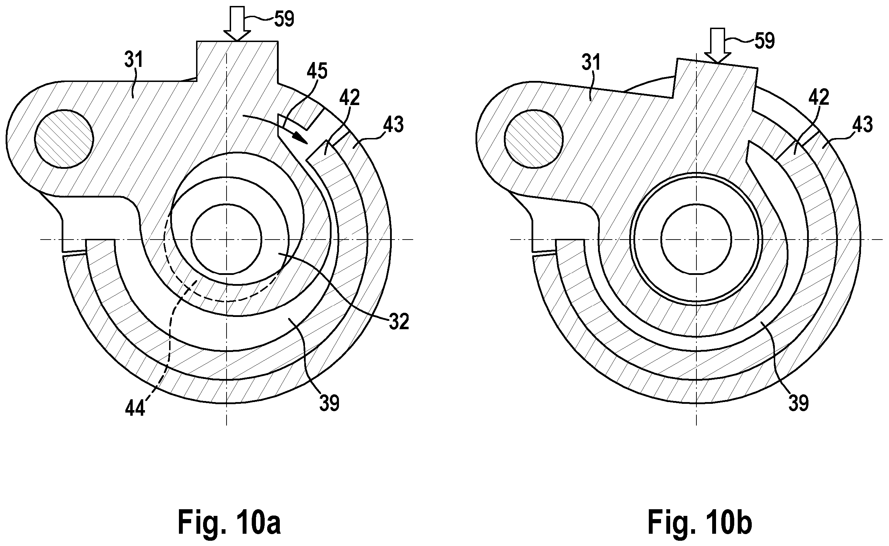

- Fig. 10 b:: eine schematische Darstellung eines Schnitts durch die Parksperre zur Blockierung des Getriebes bei betätigtem Notfallantrieb,

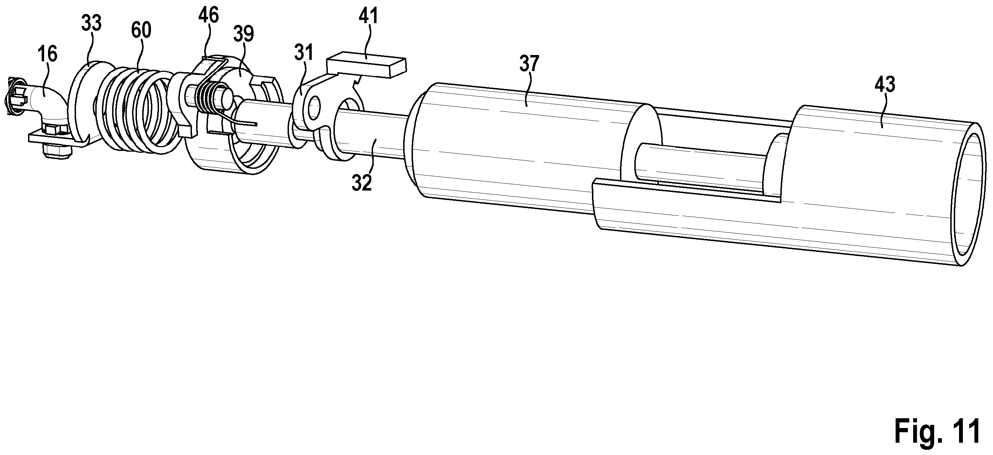

- Fig. 11:: eine schematische Darstellung des Aufbaus der Parksperre zur Blockierung des Getriebes

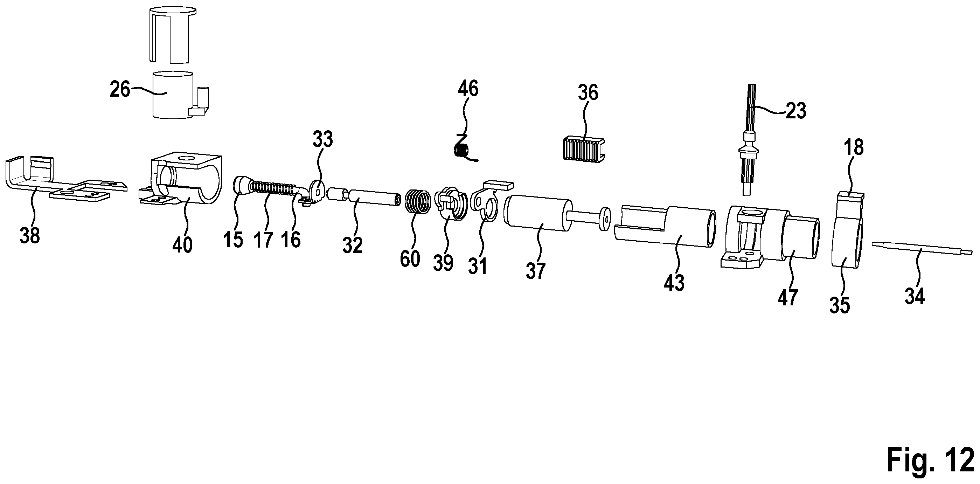

- Fig. 12:: eine schematische Darstellung des Aufbaus der Betätigungsmechanik der Parksperre zur Blockierung des Getriebes.

Alle Figuren sind lediglich schematische Darstellungen des erfindungsgemäßen Fahrzeugantriebs bzw. seiner Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

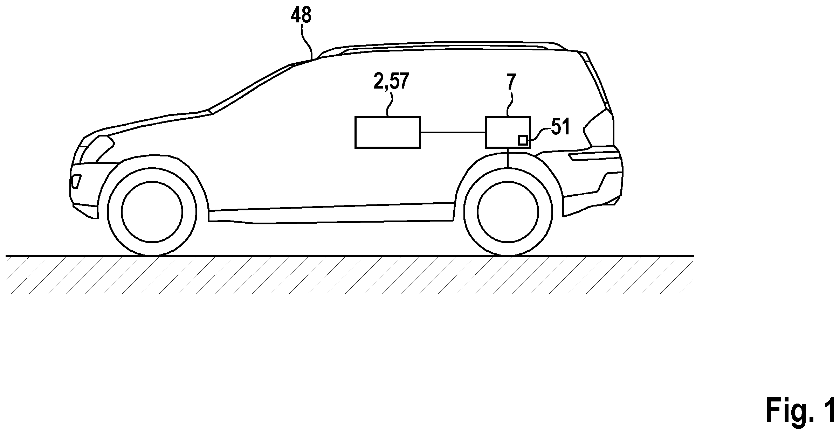

Figur 1 zeigt eine schematische Darstellung eines Fahrzeugs 48 mit einer aus einem Elektromotor 2 oder einem Verbrennungsmotor 57 und einem Getriebe 7 bestehenden Antriebseinheit 1. Das Fahrzeug 48 ist hier schematisch als Mehrspurfahrzeug dargestellt, kann aber auch ein Einspurfahrzeug wie beispielsweise ein elektrisch angetriebenes Motorrad oder ein Fahrrad mit einem elektrischen Hilfsantrieb sein. Der Elektromotor 2 oder der Verbrennungsmotor 57 treibt über das Getriebe 7 das Antriebsrad oder die Antriebsräder des Fahrzeugs 48 an. Bei Verwendung eines Verbrennungsmotors 57 wird üblicherweise ein Getriebe 7 mit mehreren schaltbaren Stufen eingesetzt, die entweder durch den Fahrer manuell zu schalten sind oder durch eine Steuerung automatisch, also ohne Zutun des Fahrers, geschaltet werden. Bei Fahrzeugen 48, die mit einem elektrischen Antriebsmotor 2 ausgestattet sind, kann auf die Ausstattung des Getriebes 7 mit schaltbaren Stufen weitgehend verzichtet werden, so dass bei elektrischen Motoren 2 in der Regel Getriebe 7 ohne oder mit sehr wenigen schaltbaren Stufen zum Einsatz kommen. Bei Mehrspurfahrzeugen sind die Getriebe 7 üblicherweise mit einem Ausgleichsgetriebe ausgestattet, um die bei Kurvenfahrt auftretenden unterschiedlichen Wege der kurveninneren und kurvenäußeren Antriebsräder auszugleichen.

Wenn das Fahrzeug abgestellt wird, wird der Antriebsstrang neben der üblicherweise vorhandenen Feststellbremse dazu verwendet, ein unbeabsichtigtes Wegrollen des Fahrzeugs zu verhindern. Dazu wird im einfachsten Fall eines Fahrzeugs 48 mit einem Verbrennungsmotor 57 und einem manuell zu schaltenden Getriebe 7 beim Parken des Fahrzeugs eine niedrige Gangstufe des Getriebes 7 eingelegt. Ein an den Antriebsrädern angreifendes Moment wird dann durch das Getriebe 7 in ein kleines Drehmoment verwandelt, das die Kompression des Verbrennungsmotors 57 nicht überwinden kann. Bei einer Ausrüstung des Fahrzeugs 48 mit einem Verbrennungsmotor 57 und einem automatisch schaltenden Getriebe 7 ist diese einfache Parkblockierung des Fahrzeugs 48 aufgrund des fehlenden direkten Durchtriebs des hydrodynamischen Drehmomentenwandlers des Getriebes 7 nicht möglich. In solchen Fällen wird das Getriebe mit einer zusätzlichen Einrichtung zur Blockierung des Getriebes, einer sogenannten Parksperre 51 ausgestattet, die ein unbeabsichtigtes Wegrollen des abgestellten Fahrzeugs 48 durch freies Drehen des Antriebsrades bzw. der Antriebsräder verhindert. Bei einem Fahrzeug 48 mit einem Elektromotor 2 muss ein unbeabsichtigtes Wegrollen des abgestellten Fahrzeugs 48 durch freies Drehen der Räder in jedem Fall durch eine zusätzliche Parksperre 51 verhindert werden, obwohl der Elektromotor 2 aufgrund der nicht vorhandenen Trennkupplung bzw. des nicht vorhandenen Drehmomentenwandlers ständig mechanisch mit dem Antriebsrad bzw. den Antriebsrädern verbunden ist. Einem Elektromotor 2 fehlt das bei einem abgestellten Verbrennungsmotor 57 vorhandene Bremsmoment, so dass trotz der direkten Kopplung des Elektromotors 2 über das Getriebe 7 an dem Antriebsrad bzw. den Antriebsrädern kein ausreichendes bremsendes Moment anliegt.

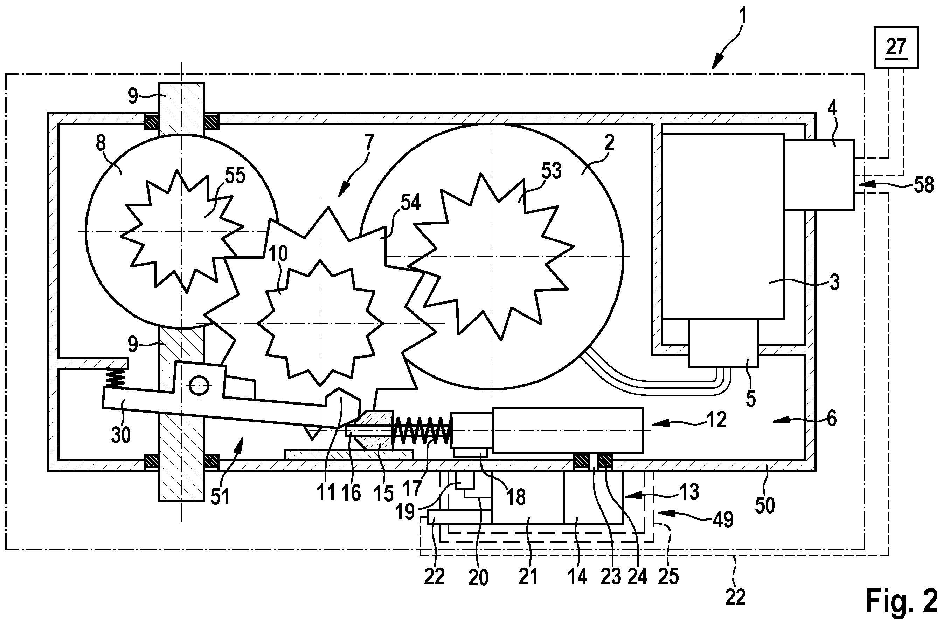

Figur 2 zeigt eine schematische Darstellung eines Fahrzeugantriebs 1 für ein Mehrspurfahrzeug mit einem Getriebe 7, einem Motor 2, einer Leistungselektronik 3 mit einem Stecker 4 zum Fahrzeugkabelbaum 58 und zur Fahrzeug-Batterie 27, einem öldichten Stecker 5 in den teilweise mit Öl gefüllten Getrieberaum 6 und einer Parksperre 51. Beispielhaft ist hier ein Elektromotor 2 dargestellt, der über ein auf seiner Welle sitzendes Ritzel 53 ein Zahnrad 54 antreibt. Dieses Zahnrad 54 treibt seinerseits über das Abtriebsritzel 55 das Ausgleichsgetriebe 8 an, welches dann das Antriebsmoment auf die Achswellen 9 überträgt.

Die Parksperre 51 besteht aus einer Sperrklinke 30, die ein mit einem Zahnrad 54 drehfest verbundenes Parksperrenrad 10 sperrt oder freigibt. Figur 2 zeigt den nicht eingelegten Zustand der Parksperre 51.

Die Betätigungsmechanik 12 der elektromechanisch betätigten Parksperre 51 liegt im Getrieberaum 6, welcher mindestens teilweise mit Öl gefüllt ist. Die Antriebsbaugruppe 13 ist außerhalb des mindestens teilweise mit Öl gefüllten Getrieberaums 6 angeordnet und kann von einem nicht mit Öl gefüllten Gehäuseteil 25 vor Spritzwasser, Steinschlag und ähnlichem geschützt werden. Der Antrieb 49 der elektromechanisch betätigten Parksperre 51 ist ein Elektromotor 14, dessen Antriebswelle 23 durch die Wand 50 des mindestens teilweise mit Öl gefüllten Getrieberaums 6 geführt ist und durch eine Dichtung 24 abgedichtet wird. Fest mit der Betätigung der Parksperre 51 verbunden ist ein Positionsgeber 18, der beispielsweise als Magnet ausgeführt ist. Die Position dieses Positionsgebers 18 wird durch einen Positionssensor 19 durch die Gehäusewand 50 hindurch erfasst, welcher beispielsweise als Halleffekt-Sensor ausgeführt ist. Der Positionssensor 19 ist über das Kabel 20 mit der Ansteuerelektronik 21 des Antriebs 49 der Parksperre 51 verbunden. Durch die Anordnung der Betätigungsmechanik 12 im mindestens teilweise mit Öl gefüllten Getrieberaum 6 ist eine gute Schmierung der bewegten Teile der Betätigungsmechanik 12 gewährleistet. Die Betätigungsstange 16 der Betätigungsmechanik 12 trägt ein Verriegelungselement 15, welches als Konus ausgeführt ist. Durch Verschieben der Betätigungsstange 16 mit dem Verriegelungselement 15 wird das Sperrelement 11 in die Verzahnung des Parksperrenrades 10 eingelegt bzw. freigegeben. Der Antrieb 49 der Parksperre 51 wird durch die Ansteuerelektronik 21 angesteuert, welche mit dem Kabel mit Stecker 22 mit der Leistungselektronik 3 und über das Kabel 20 mit dem Positionssensor 19 verbunden ist. Zwischen dem Verriegelungselement 15 und der Betätigungsmechanik 12 ist eine Druckfeder 17 angeordnet. Wenn das Sperrelement 11 aufgrund einer Zahn-auf-Zahn-Stellung nicht in die Verzahnung des Parksperrenrades 10 eingelegt werden kann, wird das Verriegelungselement 15 bei Betätigung des Antriebs 49 zum Einlegen der Parksperre 51 auf der Betätigungsstange 16 zurückgeschoben und die Druckfeder 17 gespannt. Bereits eine geringe Drehbewegung der Zahnräder des Getriebes 7 beispielsweise durch beginnendes Wegrollen des Fahrzeugs führt dazu, dass die Zahn-auf-Zahn-Stellung nicht mehr gegeben ist und das Verriegelungselement 15 das Sperrelement 11 mit Hilfe der Federspannung der Druckfeder 17 in die Verzahnung des Parksperrenrades 10 ohne weitere Betätigung des Antriebs 49 der Parksperre 51 einlegt.

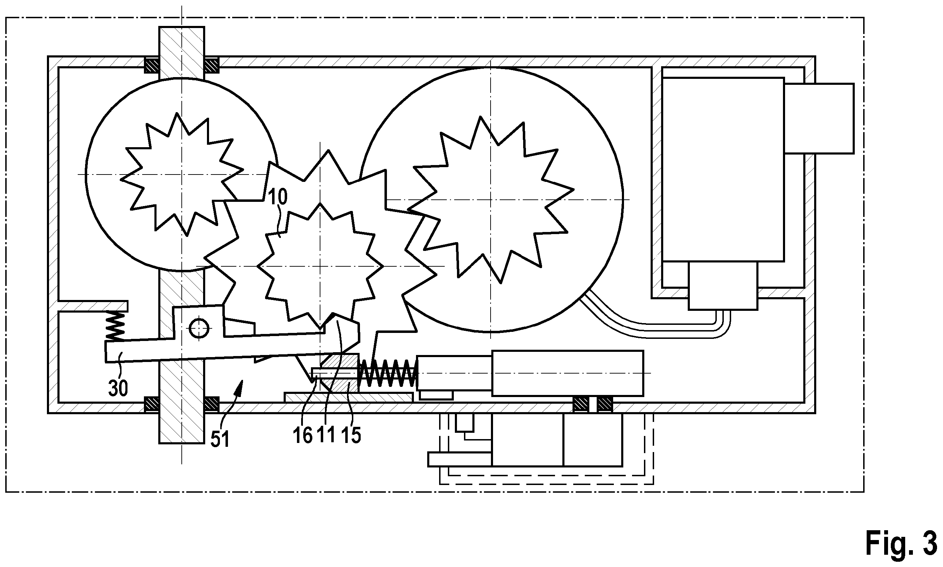

Figur 3 zeigt eine schematische Darstellung eines Fahrzeugantriebs 1 für ein Mehrspurfahrzeug mit eingelegtem Zustand der Parksperre 51. Das Sperrelement 11 greift in die Verzahnung des Parksperrenrades 10 ein. Die Betätigungsstange 16 befindet sich im ausgefahrenen Zustand, so dass das Verriegelungselement 15 die Sperrklinke 30 mit dem Sperrelement 11 in die Verzahnung des Parksperrenrades 10 drückt und dort hält.

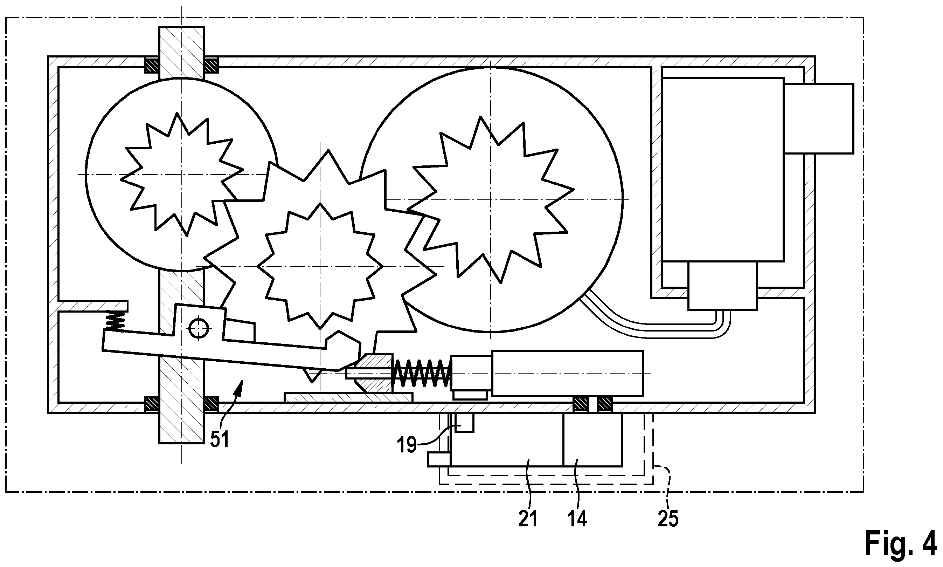

Figur 4 zeigt eine schematische Darstellung eines Fahrzeugantriebs 1 für ein Mehrspurfahrzeug mit nicht eingelegtem Zustand der Parksperre 51. Der Positionssensor 19 ist in die Ansteuerelektronik 21 der Parksperre integriert, welche zusammen mit dem Elektromotor 14 von einem nicht mit Öl gefüllten Gehäuseteil 25 vor Spritzwasser, Steinschlag und ähnlichem geschützt werden kann.

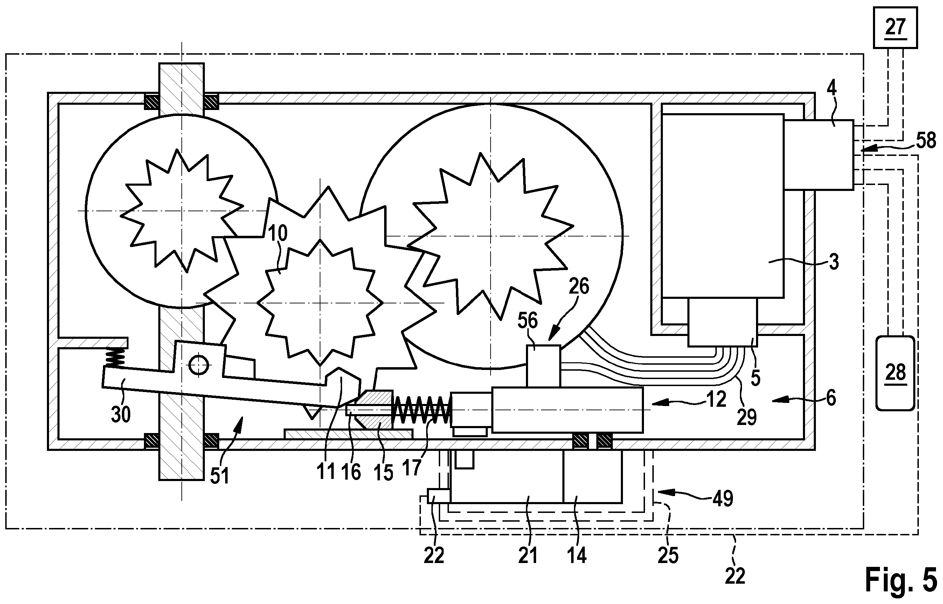

Figur 5 zeigt eine schematische Darstellung eines erfindungsgemäßen Fahrzeugantriebs 1 für ein Mehrspurfahrzeug mit einem zusätzlichen Notfallantrieb 26 der elektromechanisch betätigten Parksperre 51. Zusätzlich zu dem außenliegenden Antrieb 49 mit dem Elektromotor 14 und der über das Kabel mit Stecker 22 mit der Leistungselektronik 3 verbundenen Ansteuerelektronik 21 ist innerhalb des mindestens teilweise mit Öl gefüllten Getrieberaums 6 ein Notfallantrieb 26 vorgesehen. Dieser Notfallantrieb 26 verfügt über eine eigene Energiereserve 28, damit auch bei einem Ausfall des Antriebs 49 bzw. der Energieversorgung 27 mindestens einmal ein sicheres Einlegen der Parksperre 51 gewährleistet ist. Der Notfallantrieb 26 besteht aus einem Elektromagneten 56, der mit der Betätigungsmechanik 12 verbunden ist. Die Ansteuerung des Elektromagneten 56 des Notfallantriebs 26 erfolgt durch die Leistungselektronik 3. Der Notfallantrieb 26 ist durch das Kabel 29 und den Stecker 5 im teilweise mit Öl gefüllten Getrieberaum 6 mit der Leistungselektronik 3 verbunden. Die Energiereserve 28 des Notfallantriebs 26 kann beispielsweise durch Super-Caps sichergestellt werden. Um die Funktion des Notfallantriebs 26 regelmäßig zu überprüfen kann die Leistungselektronik 3 den Elektromagneten 56 beim Einlegen der Parksperre in frei wählbaren Abständen betätigen. Damit wird ein sicherer Betrieb in einem Notfall gewährleistet und eine Störung beispielsweise durch einen durch Korrosion unbeweglich gewordenen Notfallantrieb 26 wird vermieden bzw. erkannt.

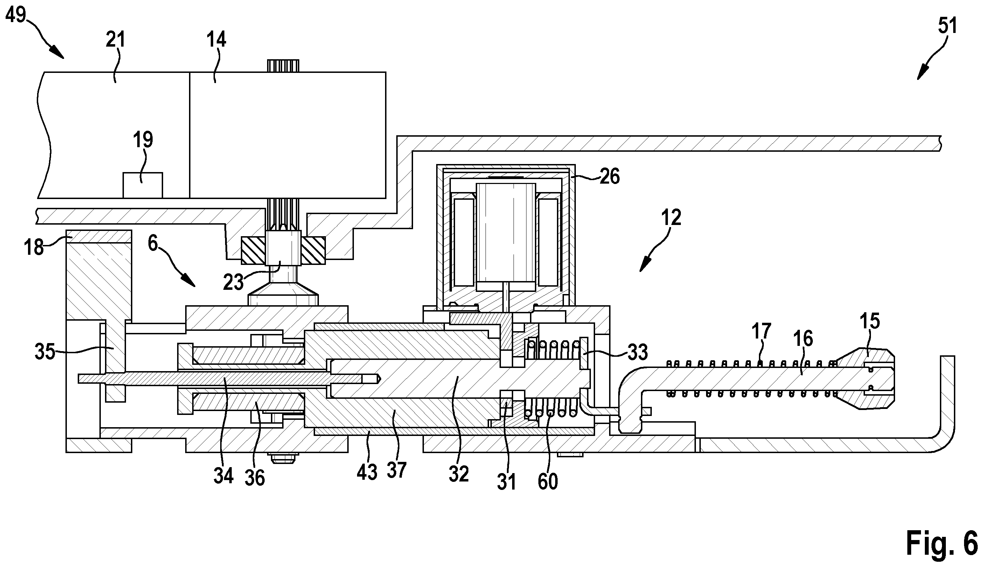

Figur 6 zeigt eine schematische Darstellung der Parksperre 51 in nicht eingelegtem Zustand mit der Betätigungsmechanik 12, dem außenliegenden Antrieb 49 der Einrichtung zur Blockierung des Getriebes 7 und dem Notfallantrieb 26. Der außenliegende Antrieb 49 der Parksperre 51 besteht aus der Ansteuerelektronik 21 mit dem integrierten Positionssensor 19 und dem Elektromotor 14, welcher über die Antriebswelle 23 die Betätigungsmechanik 12 der Parksperre 51 antreibt. Diese Betätigungsmechanik 12 ist innerhalb des mindestens teilweise mit Öl gefüllten Getrieberaums 6 angeordnet und betätigt über die Betätigungsstange 16 das Verriegelungselement 15. Die Antriebswelle 23 greift in die Verzahnung des Verzahnungsteils 36 ein und bewegt den äußeren Kolben 37 in axialer Richtung entlang der Zylinderachse des äußeren Kolbens 37. Innerhalb des äußeren Kolbens 37 ist der innere Kolben 32 angeordnet, der mit der Stange 34 und dem als Verbindung dienenden Winkelteil 33 verbunden ist. Auf der Stange 34 ist die Geberführung 35 angeordnet, auf der der Positionsgeber 18 angeordnet ist. Damit wird der Positionsgeber 18 sowohl bei Betätigung durch den Antrieb 49 als auch bei Betätigung durch den Notfallantrieb 26 immer zusammen mit dem inneren Kolben 32 bewegt. Dadurch ergibt sich eine vom Antrieb der Parksperre 51 unabhängige Erkennung der Position der Parksperre 51. Auf dem inneren Kolben 32 befindet sich die Feder 60, die den Notfallantrieb 26 unterstützt und die bei Betätigung des Elektromagneten 56 des Notfallantriebs 26 freigegeben wird und dadurch die Betätigungsstange 16 mit dem Verriegelungselement 15 so ausfährt, dass das Verriegelungselement 15 die Sperrklinke 30 mit dem Sperrelement 11 in die Verzahnung des Parksperrenrades 10 drückt und dort hält. Die Feder 60 wird im Normalbetrieb bei jedem Lösen der Parksperre 51 nach einer Betätigung des Notfallantriebs 26 durch den Antrieb 49 wieder gespannt. Damit ist es möglich, nach einer Betätigung des Notfallantriebs 26 die Parksperre 51 durch das Lösen mit Hilfe des Antriebs 49 wieder in den Normalbetrieb zu überführen.

Der als Hubmagnet ausgeführte Notfallantrieb 26 betätigt den Sperrriegel 31 über den Sperrriegelarm 41, welcher bei Betätigung den inneren Kolben 32 freigibt und dieser durch die gespannte Feder 60 verschoben wird und über die Betätigungsstange 16 und das Verriegelungselement 15 das Sperrelement 11 betätigt. Der äußere Kolben ist in einem rohrförmigen Gehäuseteil 43 angeordnet. Im Sperrzustand des Sperrriegels 31 findet keine Relativbewegung zwischen dem äußeren Kolben 37 und dem inneren Kolben 32 statt. Der Notfallantrieb 26 ist auf dem Gehäuseteil 40 angeordnet und wird nicht mit dem äußeren Kolben 37 und dem inneren Kolben 32 zusammen verschoben. Damit kann der Notfallantrieb 26 ohne bewegte elektrische Anschlüsse ausgeführt werden.

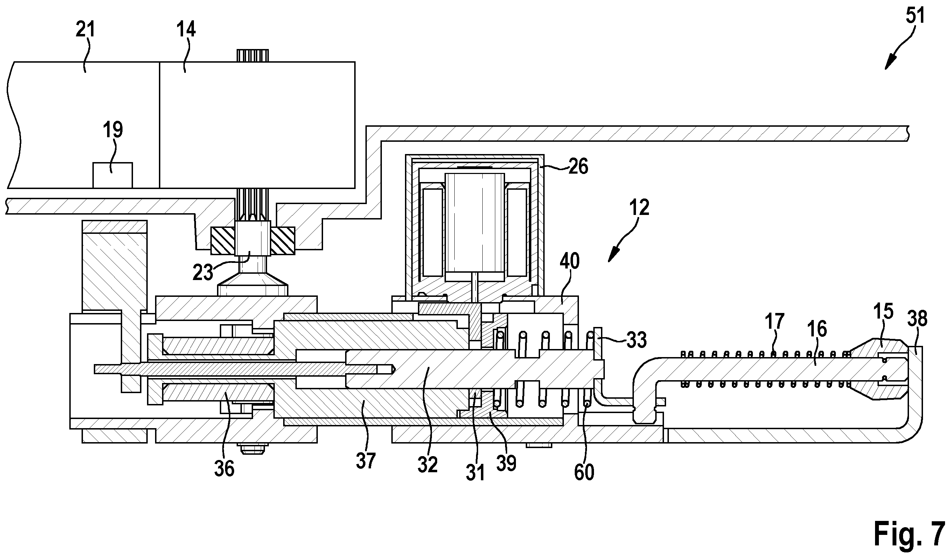

Figur 7 zeigt eine schematische Darstellung der Parksperre 51 im eingelegten Zustand nach einer Betätigung durch den Notfallantrieb 26. Der innere Kolben 32 ist zusammen mit der über das als Verbindung dienende Winkelteil 33 verbundenen Betätigungsstange 16 mit dem Verriegelungselement 15 und der Stange 34 bis zum Anschlag des Gegenlagers 38 axial durch die Spannung der Feder 60 verschoben. Der Sperrriegel 31 ist durch den Notfallantrieb 26 betätigt.

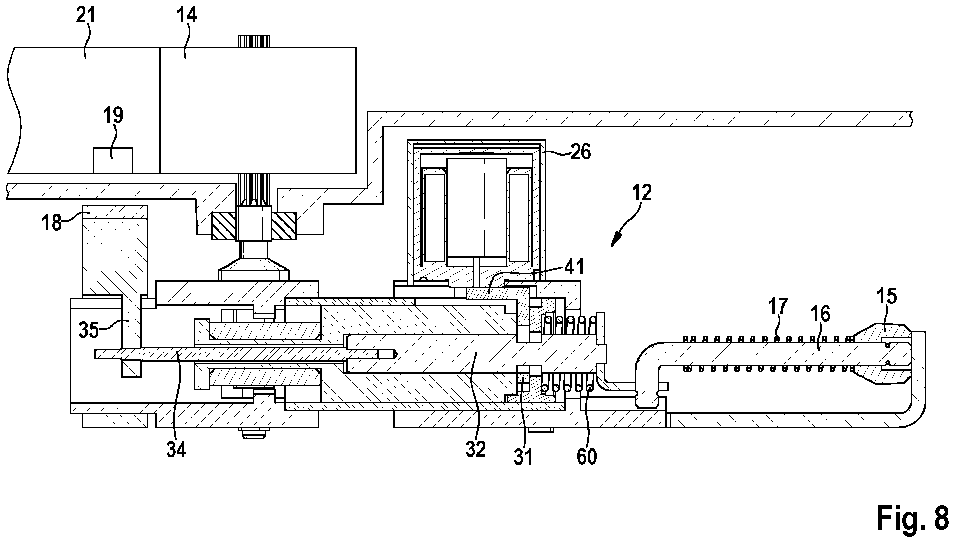

Figur 8 zeigt eine schematische Darstellung der Parksperre 51. Um die Parksperre 51 nach einer Betätigung durch den Notfallantrieb 26 wieder zu lösen wird der Antrieb 49 der Einrichtung zur Blockierung des Getriebes 7 durch die Ansteuerung 21 und den Elektromotor 14, die Antriebswelle 23 und das Verzahnungsteil 36 zunächst ebenfalls wie bei dem Einlegen der Parksperre 51 in einer Normalbetätigung betätigt. Durch die axiale Bewegung des äußeren Kolbens 37 wird die Feder 60 wieder gespannt, da die Betätigungsstange 16 durch den Anschlag am Gegenlager 38 anliegt. Bei vollständig gespannter Feder 60 erreicht der über den Sperrriegelarm 41 gehaltene Sperrriegel 31 im Sperrriegelhalter 39 seine Verriegelungsposition und rastet ein. Bei Erreichen des mechanischen Anschlags am Gehäuseteil 40 des auf dem äußeren Kolben 37 sitzenden Sperrriegelhalters 39 wird die weitere Bewegung des Elektromotors 14 blockiert. Der sich durch die Blockierung ergebende Stromanstieg des Elektromotors 14 wird durch die Ansteuerelektronik 21 erfasst, welche nach der Erkennung der Blockierung die Drehrichtung des Elektromotors 14 umschaltet. Damit bewegt der Elektromotor 14 über die Antriebswelle 23 und das Verzahnungsteil 36 die Betätigungsmechanik 12 mit dem Gehäuseteil 40 in den nicht eingelegten Zustand der Parksperre 51. Dabei bleibt die Feder 60 gespannt. Damit wird der Ausgangszustand erreicht, wie in Figur 6 dargestellt. Durch die Gestaltung der Betätigungsmechanik 12 mit den Notfallantrieb 26 und dem dazu über den kompletten Hub der Betätigungsmechanik 12 verschiebbaren Sperrriegelarm 41 kann der Notfallantrieb 26 aus jeder Position der Parksperre 51 betätigt werden und das Einlegen der Parksperre 51 ohne Einschränkungen auch bei einer bereits teilweise erfolgten Einlegebewegung gewährleisten. Damit ist das System der Parksperre immer redundant.

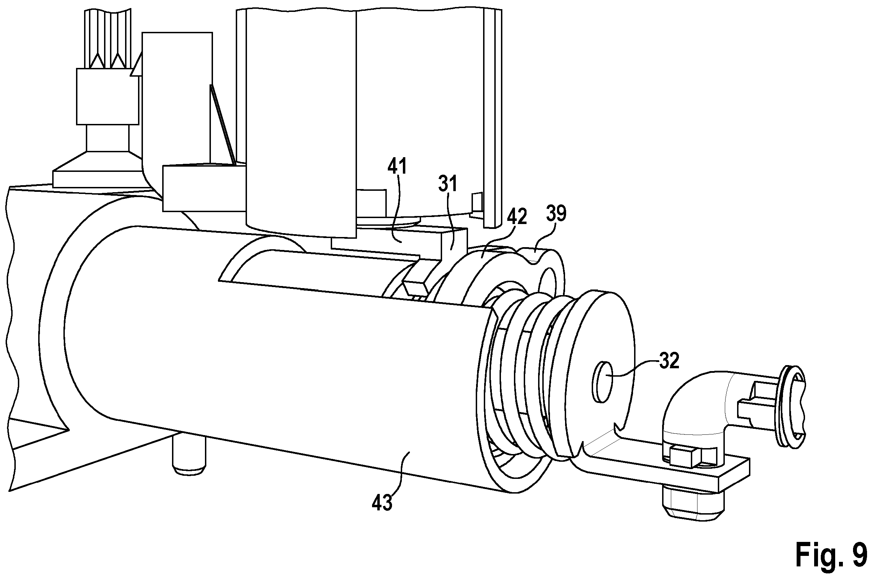

Figur 9 zeigt eine schematische dreidimensionale Ansicht der Parksperre 51 mit den Komponenten Sperrriegel 31, Innerer Kolben 32, Sperrriegelhalter 39, Sperrriegelarm 41, Sperrriegelhalternase 42 und dem rohrförmigen Gehäuseteil 43.

Figur 10 a zeigt eine schematische Darstellung eines Schnitts durch die in Figur 9 gezeigte Parksperre 51 mit dem rohrförmigen Gehäuseteil 43. Der Sperrriegel 31 ist im Eingriff und sperrt den inneren Kolben 32. Die Sperrfunktion ergibt sich durch die Überdeckung 44. In axialer Richtung wird der Sperrriegel 31 durch den Sperrriegelhalter 39 gehalten. Bei Betätigung des Notfallantriebs 26 wird eine Betätigungskraft 59 in Pfeilrichtung auf den Sperrriegel 31 ausgeübt wodurch eine Bewegung in Richtung 45 ausgelöst wird. Diese Bewegung wird durch die Sperrriegelhalternase 42 begrenzt. Damit wird die Überdeckung 44 aufgehoben und der innere Kolben 32 kann sich in axialer Richtung frei bewegen.

Figur 10 b zeigt eine schematische Darstellung eines Schnitts durch die in Figur 9 gezeigte Parksperre 51 rohrförmigen Gehäuseteil 43. Der Sperrriegel 31 ist nicht mehr im Eingriff, der innere Kolben 32 kann sich in axialer Richtung frei bewegen. Diese Darstellung entspricht dem Zustand der Parksperre 51 nach Betätigung des Notfallantriebs 26.

Figur 11 zeigt eine schematische Darstellung des Aufbaus der in Figur 6 beispielhaft gezeigten Parksperre 51 mit den Komponenten Betätigungsstange 16, das als Verbindung dienende Winkelteil 33, Feder 60, Sperrriegelhalter 39, Schenkelfeder 46, Sperrriegel 31, Sperrriegelarm 41, innerem Kolben 32 und äußerem Kolben 37.

Figur 12 zeigt eine schematische Darstellung des Aufbaus der Betätigungsmechanik 12 der in Figur 6 beispielhaft gezeigten Parksperre 51 mit den Komponenten Gegenlager 38, Hubmagnet des Notfallantriebs 26, Gehäuseteil 40, Verriegelungselement 15, Betätigungsstange 16, das als Verbindung dienende Winkelteil 33, innerer Kolben 32, Feder 60, Sperrriegelhalter 39, Schenkelfeder 46, Sperrriegel 31, äußerer Kolben 37 mit Verzahnungsteil 36, rohrförmiges Gehäuseteil 43, Gehäuseteil 47 mit der Antriebswelle 23, Geberführung 35 und Positionsgeber 18 und der Stange 34. Diese Betätigungsmechanik 12 kann durch einfaches Kürzen bzw. Verlängern beispielsweise der Komponenten Betätigungsstange 16, innerer Kolben 32, äußerer Kolben 37 oder der Stange 34 an unterschiedliche Einbausituationen angepasst werden.

## Patentansprüche

1. Fahrzeugantrieb (1), mit:
einem Getriebe (7) mit einem mindestens teilweise mit Öl gefüllten Getrieberaum (6); und
einer Parksperre (51) zur Blockierung des Getriebes (7) mit einer Betätigungsmechanik (12), die in dem mindestens teilweise mit Öl gefüllten Getrieberaum (6) angeordnet ist, und einem Antrieb (49) der Betätigungsmechanik (12), wobei der Antrieb (49) außerhalb des mindestens teilweise mit Öl gefüllten Getrieberaums (6) angeordnet ist, wobei der Antrieb (49) ein Elektromotor (14) ist, wobei eine Antriebswelle (23) des Elektromotors (14) durch eine Wand (50) des Getriebes (7) in den mindestens teilweise mit Öl gefüllten Getrieberaum (6) geführt ist und durch eine Dichtung (24) abgedichtet ist, **dadurch gekennzeichnet, dass** ein zusätzlicher Notfallantrieb (26) für die Parksperre (51) zur Blockierung vorhanden ist, der innerhalb des mindestens teilweise mit Öl gefüllten Getrieberaums (6) angeordnet ist und eine eigene Energiereserve (28) aufweist, wobei ein Positionsgeber (18) der elektromechanisch betätigten Parksperre (51) zur Blockierung innerhalb des mindestens teilweise mit Öl gefüllten Getrieberaums (6) angeordnet ist und die Betätigungsmechanik (12) zusammen mit dem Positionsgeber (18) und dem Notfallantrieb (26) eine vormontierbare Baugruppe (52) bildet.

2. Fahrzeugantrieb (1) nach Anspruch 1, **dadurch gekennzeichnet, dass** der Elektromotor (14) eine direkt am Elektromotor (14) angebaute und außerhalb des mindestens teilweise mit Öl gefüllten Getrieberaums (6) liegende Ansteuerelektronik (21) aufweist.

3. Fahrzeugantrieb (1) nach Anspruch 1, **dadurch gekennzeichnet, dass** der Positionsgeber (18) ein Magnet ist.

4. Fahrzeugantrieb (1) nach Anspruch 3, **dadurch gekennzeichnet, dass** ein Positionssensor (19) außerhalb des mindestens teilweise mit Öl gefüllten Getrieberaums (6) angeordnet ist.

5. Fahrzeugantrieb (1) nach Anspruch 4, **dadurch gekennzeichnet, dass** der Positionssensor (19) in der Ansteuerelektronik (21) des Elektromotors (14) außerhalb des mindestens teilweise mit Öl gefüllten Getrieberaums (6) angeordnet ist.

6. Fahrzeugantrieb (1) nach Anspruch 2, **dadurch gekennzeichnet, dass** der Antrieb (49) zusammen mit der Ansteuerelektronik (21) eine vormontierbare Baugruppe (13) bildet.

7. Fahrzeugantrieb (1) nach Anspruch 1, **dadurch gekennzeichnet, dass** der Notfallantrieb (26) für die Parksperre (51) zur Blockierung des Getriebes (7) diese aus jeder Position der Betätigungsmechanik (12) einlegen kann.

## Claims

1. Vehicle drive (1), with:
a transmission (7) with an at least partially oil-filled transmission space (6); and
a parking lock (51) for blocking the transmission (7) with an actuating mechanism (12), which is arranged in the at least partially oil-filled transmission space (6), and a drive (49) of the actuating mechanism (12), wherein the drive (49) is arranged outside the at least partially oil-filled transmission space (6), wherein the drive (49) is an electric motor (14), wherein a drive shaft (23) of the electric motor (14) is guided through a wall (50) of the transmission (7) into the at least partially oil-filled transmission space (6) and is sealed by a seal (24), **characterized in that** there is an additional emergency drive (26) for the parking lock (51) for blocking, which is arranged within the at least partially oil-filled transmission space (6) and has its own energy reserve (28),
wherein a position sensor (18) of the electromechanically actuated parking lock (51) is arranged for blocking within the at least partially oil-filled transmission space (6), and the actuating mechanism (12) together with the position sensor (18) and the emergency drive (26) forms a module (52) which can be preassembled.

2. Vehicle drive (1) according to Claim 1, **characterized in that** the electric motor (14) has control electronics (21) mounted directly on the electric motor (14) and lying outside the at least partially oil-filled transmission space (6).

3. Vehicle drive (1) according to Claim 1, **characterized in that** the position sensor (18) is a magnet.

4. Vehicle drive (1) according to Claim 3, **characterized in that** a position sensor (19) is arranged outside the at least partially oil-filled transmission space (6).

5. Vehicle drive (1) according to Claim 4, **characterized in that** the position sensor (19) is arranged in the control electronics (21) of the electric motor (14) outside the at least partially oil-filled transmission space (6).

6. Vehicle drive (1) according to Claim 2, **characterized in that** the drive (49) together with the control electronics (21) forms a module (13) which can be preassembled.

7. Vehicle drive (1) according to Claim 1, **characterized in that**, in order to block the transmission (7), the emergency drive (26) for the parking lock (51) can insert the latter from any position of the actuating mechanism (12).

## Revendications

1. Système de propulsion de véhicule (1), comprenant :
une boîte de vitesses (7) avec un espace de boîte de vitesses (6) au moins partiellement rempli d'huile ; et
un verrouillage de stationnement (51) destiné à bloquer la boîte de vitesses (7) comprenant un mécanisme d'actionnement (12), qui est disposé dans l'espace de boîte de vitesses (6) au moins partiellement rempli d'huile, et un système d'entraînement (49) du mécanisme d'actionnement (12), le système d'entraînement (49) étant disposé à l'extérieur de l'espace de boîte de vitesses (6) au moins partiellement rempli d'huile, le système d'entraînement (49) étant un moteur électrique (14), un arbre d'entraînement (23) du moteur électrique (14) passant à travers une paroi (50) de la boîte de vitesses (7) dans l'espace de boîte de vitesses (6) au moins partiellement rempli d'huile et étant rendu étanche par une garniture d'étanchéité (24), **caractérisé en ce qu'**un système d'entraînement d'urgence (26) supplémentaire est présent pour le verrouillage de stationnement (51) en vue du blocage, lequel est disposé à l'intérieur de l'espace de boîte de vitesses (6) au moins partiellement rempli d'huile et possède une réserve d'énergie (28) propre, un transmetteur de position (18) du verrouillage de stationnement (51) à actionnement électromécanique, en vue du blocage, étant disposé à l'intérieur de l'espace de boîte de vitesses (6) au moins partiellement rempli d'huile et le mécanisme d'actionnement (12), conjointement avec le transmetteur de position (18) et le système d'entraînement d'urgence (26), formant un sous-ensemble (52) qui peut être préassemblé.

2. Système de propulsion de véhicule (1) selon la revendication 1, **caractérisé en ce que** le moteur électrique (14) possède une électronique de commande (21) montée directement sur le moteur électrique (14) et située à l'extérieur de l'espace de boîte de vitesses (6) au moins partiellement rempli d'huile.

3. Système de propulsion de véhicule (1) selon la revendication 1, **caractérisé en ce que** le transmetteur de position (18) est un aimant.

4. Système de propulsion de véhicule (1) selon la revendication 3, **caractérisé en ce qu'**un capteur de position (19) est disposé à l'extérieur de l'espace de boîte de vitesses (6) au moins partiellement rempli d'huile.

5. Système de propulsion de véhicule (1) selon la revendication 4, **caractérisé en ce que** le capteur de position (19) est disposé dans l'électronique de commande (21) du moteur électrique (14) à l'extérieur de l'espace de boîte de vitesses (6) au moins partiellement rempli d'huile.

6. Système de propulsion de véhicule (1) selon la revendication 2, **caractérisé en ce que** le système d'entraînement (49) forme conjointement avec l'électronique de commande (21) un sous-ensemble (13) qui peut être préassemblé.

7. Système de propulsion de véhicule (1) selon la revendication 1, **caractérisé en ce que** le système d'entraînement d'urgence (26) pour le verrouillage de stationnement (51), en vue du blocage de la boîte de vitesses (7), peut engager celui-ci à partir de n'importe quelle position du mécanisme d'actionnement (12).
